Europäisches Patentamt

European Patent Office

Office européen des brevets

(11) Numéro de publication: **0 264 313 B1**

## FASCICULE DE BREVET EUROPEEN

(45) Date de publication de fascicule du brevet:
**29.01.92**

(51) Int. Cl.⁵: **H01H 83/04**

(21) Numéro de dépôt: **87402072.0**

(22) Date de dépôt: **16.09.87**

(54) Appareil électrique de protection différentielle à circuit test.

(30) Priorité: **23.09.86 FR 8613368**

(43) Date de publication de la demande:
**20.04.88 Bulletin 88/16**

(45) Mention de la délivrance du brevet:
**29.01.92 Bulletin 92/05**

(84) Etats contractants désignés:
**AT BE CH DE ES GB IT LI SE**

(56) Documents cités:
**EP-A- 0 189 493**
**DE-A- 2 909 941**
**DE-B- 1 173 175**
**FR-A- 2 241 868**
**FR-A- 2 437 692**

(73) Titulaire: **MERLIN GERIN**
**Rue Henri Tarze**
**F-38050 Grenoble Cédex(FR)**

(72) Inventeur: **Challande, René**
**Merlin Gerin-Sce. Brevets**
**F-38050 Grenoble Cedex(FR)**
Inventeur: **De Robertis, Patrick**
**Merlin Gerin-Sce. Brevets**
**F-38050 Grenoble Cedex(FR)**
Inventeur: **Duchenaud, Jacky**
**Merlin Gerin-Sce. Brevets**
**F-38050 Grenoble Cedex(FR)**

(74) Mandataire: **Kern, Paul et al**
**Merlin Gerin Sce. Brevets 20, rue Henri Tarze**
**F-38050 Grenoble Cédex(FR)**

## Description

L'invention est relative à un appareil électrique de protection différentielle, notamment un disjoncteur ou un interrupteur, ayant un dispositif de coupure multipolaire à contacts séparables actionnés par un mécanisme de commande, et un déclencheur différentiel comportant un détecteur de courant différentiel résiduel à transformateur totalisateur, un relais de déclenchement alimenté par ledit détecteur de manière à transmettre un ordre de déclenchement au mécanisme lors de l'apparition d'un courant différentiel, et un circuit test ayant au moins une résistance d'essai agencée dans un circuit dérivé de fuite connecté entre deux points de raccordement des conducteurs actifs du réseau, respectivement en amont et en aval du transformateur, le circuit test comprenant un bouton test dont la fermeture crée un courant différentiel artificiel détecté par ledit détecteur, et un dispositif de protection susceptible de déconnecter ladite résistance et d'interrompre le courant différentiel artificiel dans le circuit test après ouverture du dispositif de coupure multipolaire par déclenchement différentiel de l'appareil. Un tel disjoncteur est par exemple déjà connu du document DE-B- 1 173 175.

La plupart des disjoncteurs et les interrupteurs différentiels de l'art antérieur sont équipés de circuits test permettant de contrôler le bon fonctionnement du déclencheur différentiel par simulation d'un défaut différentiel. Le dispositif de protection du circuit test empêche la détérioration de la résistance d'essai en cas d'enfoncement prolongé du bouton test, et il comporte généralement un interrupteur qui ouvre le circuit test lorsque le disjoncteur est ouvert par déclenchement différentiel. L'ouverture de l'interrupteur de protection interrompt bien la circulation du courant d'essai dans la résistance, mais l'une des bornes du bouton test reste reliée à demeure avec l'un des points de raccordement avec les conducteurs actifs du réseau. En fonction du mode de raccordement par l'amont ou l'aval du disjoncteur, l'une des bornes du bouton test peut rester sous tension après ouverture du disjoncteur. Cette absence d'isolement est encore plus problématique dans le cas où le disjoncteur est équipé d'une commande de déclenchement à distance, associée au déclencheur différentiel, et comprenant un contact de télécommande susceptible d'être connecté par une ligne à des fiches accessibles du disjoncteur, reliées en parallèle aux bornes du bouton test.

L'objet de l'invention consiste à réaliser un disjoncteur ou un interrupteur différentiel à sécurité totale, indépendamment du mode d'alimentation par l'amont ou l'aval.

Selon l'invention, le dispositif de protection du circuit test comporte une paire de contacts d'interruption agencés entre les points de raccordement des conducteurs actifs et le bouton test de manière à assurer après déclenchement différentiel une mise hors tension du bouton test indépendamment du mode de raccordement de l'appareil électrique.

Le circuit test comporte deux résistances d'essai connectées respectivement entre les points de raccordement des conducteurs actifs et les contacts d'interruption. La subdivision de la résistance d'essai en deux résistances élémentaires permet d'obtenir une sécurité suffisante en cas de soudure de l'un des contacts d'interruption du circuit test.

Selon un développement de l'invention, une commande de déclenchement à distance comporte un moyen de télécommande inséré dans un circuit de liaison susceptible d'être connecté électriquement en parallèle aux bornes du bouton test, l'ensemble étant agencé pour isoler le bouton test et le moyen de télécommande lorsque l'appareil est ouvert.

Le déclencheur différentiel comporte une première liaison mécanique susceptible de transmettre l'ordre de déclenchement du relais vers le mécanisme de commande, et une deuxième liaison mécanique avec le mécanisme de com mande à manette pour dériver du mouvement d'ouverture du dispositif de coupure multipolaire, un mouvement de réarmement automatique du relais, la deuxième liaison mécanique étant équipée d'un levier de réarmement monté à pivotement sur un axe entre une première et une deuxième positions stables correspondant à l'ouverture et à la fermeture de l'appareil.

Le levier de réarmement coopère simultanément avec les deux contacts d'interruption du circuit test pour provoquer l'ouverture automatique desdits contacts lors du réarmement du relais correspondant à la venue du levier de réarmement vers la première position, et la refermeture desdits contacts lorsque le levier de réarmement est déplacé vers la deuxième position au cours de la fermeture du mécanisme de commande à manette de l'appareil.

D'autres avantages et caractéristiques ressortiront plus clairement de la description qui va suivre d'un mode de réalisation de l'invention donné à titre d'exemple non limitatif, et représenté aux dessins annexés, dans lesquels :

- La figure 1 représente le schéma électrique d'un appareil électrique de protection différentielle selon l'invention ;
- La figure 2 est une vue en élévation du déclencheur différentiel susceptible d'être accolé au bloc coupure, l'ensemble étant représenté en position fermé-armé ;
- Les figures 3 à 5 montrent respectivement des vues en coupe selon les lignes III-III, IV-IV, et V-V de la figure 2.

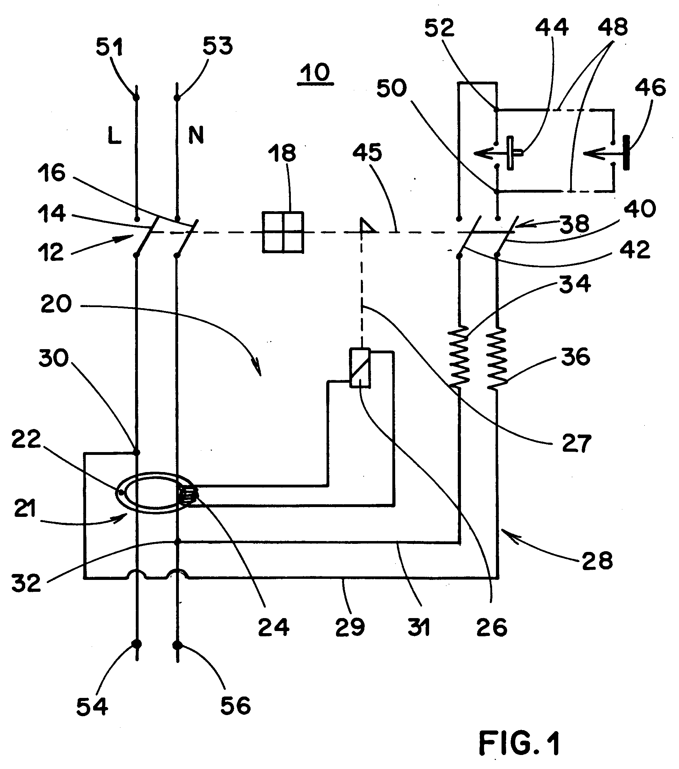

La figure 1 montre le schéma électrique d'un appareil de coupure, notamment un disjoncteur différentiel bipolaire inséré dans un réseau alternatif monophasé ayant un conducteur de phase L et un conducteur de neutre N. Le disjoncteur 10 comporte un dispositif de coupure 12 bipolaire ou unipolaire et neutre à contacts séparables 14,16 actionnés par un mécanisme 18 de commande, lequel coopère avec un déclencheur magnétothermique (non représenté) sensible à des courants de surcharge et de courtcircuit, et un déclencheur différentiel 20 sensible à un courant de fuite à la terre.

Le déclencheur magnétothermique est supprimé dans le cas où l'appareil de coupure est un interrupteur différentiel.

Le déclencheur différentiel 20 comprend un détecteur de courant différentiel résiduel formé par un transformateur totalisateur 21 de détection d'un courant homopolaire, ayant un noyau 22 torique entourant les conducteurs actifs L et N, et un enroulement de mesure 24 bobiné sur le noyau 22. L'enroulement de mesure 24 est connecté électriquement à un relais électromagnétique 26 polarisé de déclenchement coopérant avec le mécanisme 18 par l'intermédiaire d'une première liaison mécanique 27 de déclenchement de manière à provoquer l'ouverture automatique des contacts 14,16 lors de l'apparition d'un défaut différentiel dans les conducteurs L et N. Un circuit test 28 est associé au déclencheur différentiel 20 en étant relié électriquement par un conducteur 29 à un premier point de raccordement 30 du conducteur de phase L, et par un conducteur 31 à un deuxième point de raccordement 32 du conducteur de neutre N, respectivement en amont et en aval du transformateur totalisateur 21. Le circuit test 28 constitue un circuit dérivé de fuite comportant une paire de résistances 34, 36 d'essai, un dispositif d'interruption ou de protection 38 à double contacts de protection 40, 42, et un bouton test 44 du type poussoir. La fermeture manuelle du bouton test 44 simule un courant différentiel par insertion des résistances 34, 36 dans le circuit test 28, permettant de vérifier le bon fonctionnement du déclencheur différentiel 20. Le courant différentiel artificiel circule dans le circuit test 28 depuis le premier point de raccordement 30 du conducteur de phase L à travers la résistance 36, le contact de protection 40, le bouton test 44, le contact de protection 42, la résistance 34, pour revenir au deuxième point de raccordement du conducteur de neutre N.

Lors de la phase de déclenchement pilotée par le relais 26, l'ouverture des contacts de protection 40, 42 du dispositif d'interruption 38 intervient automatiquement grâce à une deuxième liaison mécanique 45 du mécanisme 18, provoquant la mise hors circuit des deux résistances 34, 36, même en cas d'enfoncement prolongé du bouton test 44. Le dispositif d'interruption 38 du circuit test 28 est situé entre le bouton test 44 et les résistances 34,36.

Une commande de déclenchement à distance peut être associée au mécanisme 18 du disjoncteur 10, et comprend un simple contact de télécommande 46 inséré dans un circuit de liaison 48 susceptible d'être connecté électriquement en parallèle aux bornes 50, 52 du bouton test 44. L'actionnement du contact de télécommande 46 procure le même effet que la fermeture locale du bouton test 44, c'est-à-dire une ouverture des contacts 14, 16 du disjoncteur 10 par déclenchement différentiel.

La présence dans le circuit test 28 des deux contacts de protection 40, 42 du dispositif d'interruption 38 permet après déclenchement différentiel d'isoler complètement le bouton test 44 et le contact de télécommande 46 du réseau. La mise hors tension par déconnexion complète des deux boutons 44, 46 s'opère par l'interruption simultanée des deux conducteurs 29, 31, indépendamment du mode de raccordement du disjoncteur 10, c'est-à-dire en cas d'alimentation par l'amont (bornes 51, 53) ou en cas d'alimentation opposée par l'aval (bornes 54, 56).

La présence d'une résistance d'essai 34, 36 dans chaque conducteur 31, 29 du circuit test 28 permet d'obtenir une sécurité totale pour l'utilisateur, même en cas de soudure accidentelle d'un des contacts de protection 40, 42.

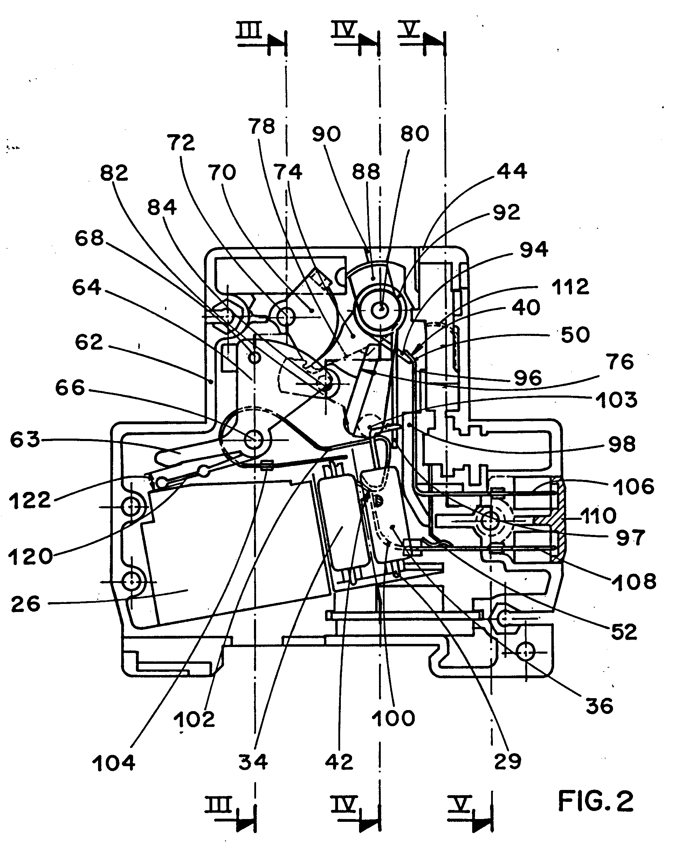

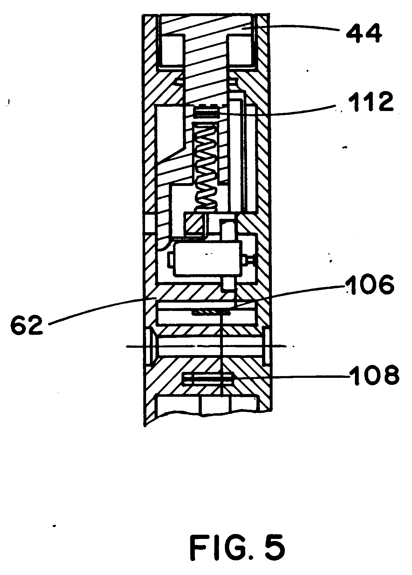

En référence aux figures 2 à 5, le mécanisme 60 du déclencheur différentiel 20 est logé dans un boîtier 62 isolant, juxtaposé et accouplé au mécanisme 18 du disjoncteur 10. Le relais de déclenchement 26 du mécanisme 60 comporte une palette mobile (non représentée) susceptible de coopérer avec un bras 63 d'actionnement d'un levier d'entraînement 64 monté à pivotement sur un axe 66 entre une position armée et une position déclenchée. Le levier d'entraînement 64 porte un doigt 68 constituant la première liaison mécanique 27 de déclenchement destinée à libérer le verrou du mécanisme 18 du disjoncteur 10 lorsque la palette du relais 26 est actionnée vers la position déclenchée suite à un défaut différentiel.

La deuxième liaison mécanique 45 du mécanisme 60 différentiel relie la manette du mécanisme 18 du disjoncteur 10 à une came 70 de transmission montée à pivotement sur un axe 72 de manière à suivre les mouvements d'ouverture et de fermeture de la manette. La came 70 de transmission coopère d'une part avec un bras 74 d'un levier de réarmement 76 et d'autre part avec un levier indicateur 78 montés tous les deux à pivotement sur un même axe 80.

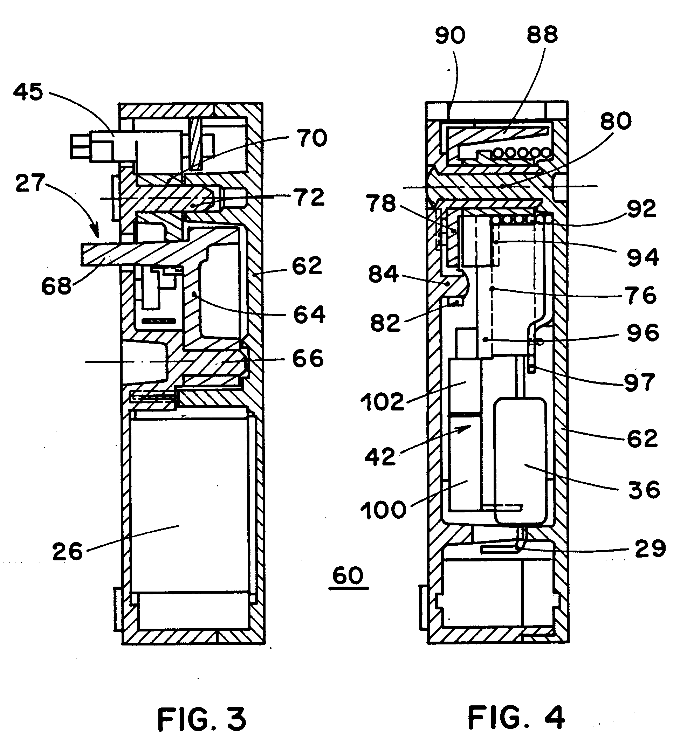

Un verrou 82 (fig. 2 et 4) est monté à pivotement sur un axe 84 et comporte un bec de retenue 86 susceptible de verrouiller le levier indicateur 78 en une position inactive dans laquelle un voyant 88 est écarté d'une fenêtre 90 de visualisation ménagée dans la face avant du boîtier 62.

Le fonctionnement du mécanisme 60 différentiel est analogue à celui décrit dans le brevet français FR-A-2 437 692 auquel on se reportera pour de plus amples détails.

Sur l'axe 80 isolant des leviers 76, 78 est enfilé un ressort 92 du type à torsion, réalisé en matériau métallique conducteur de l'électricité. L'une des extrémités 94 du ressort 92 prend appui sur un rebord du levier de réarmement 76 de manière à le solliciter dans le sens des aiguilles d'une montre, en appui de la came 70. L'extrémité 94 du ressort peut coopérer d'autre part avec une première languette 96 fixe conductrice pour constituer le contact de protection 40 du dispositif d'interruption 38 du circuit test 28. L'autre extrémité 97 du ressort 92 se trouve en engagement contre une butée 98 du boîtier 62, et est connectée à la résistance 36 branchée électriquement par le conducteur 29 au premier point de raccordement 30 du conducteur de phase L.

L'autre contact de protection 42 du dispositif d'interruption 38 comprend une deuxième languette 100 fixe conductrice susceptible de coopérer avec une pièce de contact d'une lame de contact 102 élastique. L'extrémité opposée de cette lame 102 est solidarisée à un ancrage 104 fixe du boîtier 62 entourant l'axe 66 de pivotement du levier d'entraînement 64, et est connectée électriquement à la résistance 34 insérée dans le conducteur 31 du circuit test 28. La lame de contact 102 est actionnée par un doigt 103 du levier de réarmement 76.

Les deux languettes 96, 100 fixes sont reliées respectivement à deux fiches 106, 108 de raccordement du circuit de liaison 48 du contact de télécommande 46, les deux fiches 106, 108 étant en liaison électrique avec les bornes 50, 52 du bouton test 44. Un bouchon 110 obture l'ouverture d'accès aux fiches 106, 108 lorsque la commande de déclenchement à distance n'est pas connectée au déclencheur différentiel 20.

Le bouton test 44 est équipé d'une lame 112 élastique déformable décrite en détail dans le brevet français n ° 2 526 995. La lame 112 vient en contact en position enfoncée du bouton test 44, avec la première languette 96 fixe du contact de protection 40.

Le fonctionnement du mécanisme 60 du déclencheur différentiel 20 selon les figures 2 à 5 est le suivant :

Lorsque le disjoncteur 10 est fermé correspondant à la position de la figure 2 du mécanisme 60 du déclencheur différentiel 20, l'apparition d'un défaut différentiel provoque le déclenchement du relais 26 entraînant le pivotement du levier d'entraînement 64 dans le sens des aiguilles d'une montre autour de l'axe 66, depuis la position armée jusqu'à la position déclenchée. Le doigt 68 de la première liaison mécanique 27 transmet l'ordre de déclenchement au verrou du mécanisme 18 du disjoncteur 10 qui ouvre les contacts 14, 16 du dispositif de coupure 12 et libère le verrou 82 du levier indicateur 78. L'ouverture du disjoncteur 10 s'accompagne d'un mouvement de pivotement de la manette et de la came 70 de transmission dans le sens inverse des aiguilles d'une montre. La deuxième liaison mécanique 45 avec le mécanisme 18 dérive du mouvement d'ouverture du disjoncteur, un mouvement de réarmement automatique du relais 26 par l'intermédiaire du levier d'entraînement 64 sollicité par le levier de réarmement 76. Le levier indicateur 78 amène d'autre part le voyant dans une position active en regard de la fenêtre 90 de visualisation pour signaler le déclenchement sur défaut différentiel. Après réarmement du relais 26, la deuxième liaison mécanique 45 ramène le levier de réarmement 76 et le levier indicateur 78 dans leur position d'origine lors d'un déplacement manuel de la manette de la position d'ouverture vers la position de fermeture du disjoncteur.

Une simulation d'un défaut différentiel s'opère par enfoncement du bouton poussoir 44 entraînant l'insertion des résistances 34, 36 dans le circuit test 28. La lame de contact 112 élastique vient en contact avec la borne 50 de la première languette 96. Après ouverture du disjoncteur 10, les deux contacts de protection 40, 42 s'ouvrent automatiquement par le mouvement de pivotement du levier de réarmement 76 dans le sens des aiguilles d'une montre. L'extrémité 94 du ressort 92 et la lame de contact 102 s'écartent respectivement des première et deuxième languettes 96, 100 fixes, et assurent la mise hors circuit des deux résistances. Le circuit test 28 est ainsi maintenu fugitivement sous tension pendant le temps de réponse du mécanisme 18 du disjoncteur. Les bornes 50, 52 et les fiches 106, 108 sont hors tension lorsque le disjoncteur est ouvert.

Lorsque la manette du disjoncteur 10 est ensuite actionnée vers la position de fermeture après réarmement du relais 26 du déclencheur différentiel 20, le levier de réarmement 76 sollicite les contacts de protection 40, 42 en p osition fermée.

Un nouveau test peut alors être effectué.

On remarque que le bras 63 d'actionnement du levier 64 est commun aux première et deuxième liaisons mécaniques 27, 45, et sert à la fois d'organe de déclenchement lors d'une émission d'un signal de déclenchement à la bobine du relais 26, et d'organe de réarmement du relais 26 lors de l'ouverture du disjoncteur. Au bras 63 est associée une languette élastique 120 (fig. 2) en matériau isolant, destinée à maintenir un jeu 122 prédéterminé entre le bras 63 et la palette après réarmement du relais 26, et lorsque la manette du disjoncteur est déplacée de la position d'ouverture vers la position de fermeture. La présence de ce jeu autorise une bonne transmission de l'ordre de déclenchement en provenance du relais 26.

**Revendications**

1. Appareil électrique de protection différentielle, notamment un disjoncteur (10) ou un interrupteur, ayant un dispositif de coupure (12) multipolaire à contacts séparables (14, 16) actionnés par un mécanisme de commande (18), et un déclencheur différentiel (20) comportant un détecteur de courant différentiel résiduel à transformateur totalisateur (21), un relais (26) de déclenchement alimenté par ledit détecteur de manière à transmettre un ordre de déclenchement au mécanisme (18) lors de l'apparition d'un courant différentiel, et un circuit test (28) ayant au moins une résistance d'essai dans un circuit dérivé de fuite connecté éntre deux points de raccordement (30, 32) des conducteurs actifs (L, N) du réseau, respectivement en amont et en aval du transformateur (21), le circuit test (28) comprenant un bouton test (44) dont la fermeture crée un courant différentiel artificiel détecté par ledit détecteur, et un dispositif de protection (38) susceptible de déconnecter ladite résistance et d'interrompre le courant différentiel artificiel dans le circuit test (28) après ouverture du dispositif de coupure (12) multipolaire par déclenchement différentiel de l'appareil, caractérisé en ce que le dispositif de protection (38) du circuit test (28) comporte une paire de contacts (40, 42) d'interruption agencés entre les points de raccordement (30, 32) des conducteurs actifs (L, N) et le bouton test (44) de manière à assurer après déclenchement différentiel une mise hors tension du bouton test (44) indépendamment du mode de raccordement de l'appareil électrique.

2. Appareil électrique de protection différentielle selon la revendication 1, caractérisé en ce que le circuit test (28) comporte deux résistances (34, 36) d'essai connectées respectivement entre les points de raccordement (32, 30) des conducteurs actifs (L, N) et les contacts (42, 40) d'interruption.

3. Appareil électrique de protection différentielle selon la revendication 2, caractérisé en ce que le bouton test (44) est relié électriquement en série avec les deux contacts (42, 40) d'interruption, à l'opposé des résistances (34, 36) d'essai, chaque borne (50, 52) du bouton test (44) étant branchée directement au contact (40, 42) d'interruption correspondant.

4. Appareil électrique de protection différentielle, selon la revendication 3, comprenant une commande de déclenchement à distance coopérant avec le déclencheur différentiel (20) pour provoquer une télécommande d'ouverture du dispositif de coupure (12) multipolaire par déclenchement différentiel artificiel, caractérisé en ce que la commande de déclenchement à distance comporte un moyen de télécommande (46) inséré dans un circuit de liaison (48) susceptible d'être connecté électriquement en parallèle aux bornes (50, 52) du bouton test (44), l'ensemble étant agencé pour isoler le bouton test 144) et le moyen de télécommande (46) lorsque l'appareil est ouvert.

5. Appareil électrique de protection différentielle selon l'une des revendications 1 à 4, le déclencheur différentiel (20) comprenant de plus une première liaison mécanique (27) susceptible de transmettre l'ordre de déclenchement du relais (26) vers le mécanisme de commande (18), et une deuxième liaison mécanique (45) avec le mécanisme de commande (18) à manette pour dériver du mouvement d'ouverture du dispositif de coupure (12) multipolaire, un mouvement de réarmément automatique du relais (26), la deuxième liaison mécanique (45) étant équipée d'un levier de réarmement (76) monté à pivotement sur un axe (80) entre une première et une deuxième positions stables correspondant à l'ouverture et à la fermeture de l'appareil, caractérisé en ce que le levier de réarmement (76) coopère simultanément avec les deux contacts d'interruption (40, 42) du circuit test (28) pour provoquer l'ouverture automatique desdits contacts (40, 42) lors du réarmement du relais (26) correspondant à la venue du levier de réarmement (76) vers la première position, et la refermeture desdits contacts (40, 42) lorsque le levier de réarmement(76) est déplacé vers la deuxième position au cours de la fermeture du mécanisme de commande (18) à manette de l'appareil.

6. Appareil électrique de protection différentielle selon la revendication 5, caractérisé en ce que le levier de réarmement (76) coopère d'une part avec une came (70) de transmission du mouvement de la manette du mécanisme de commande (18), et d'autre part avec un levier d'entraînement (64) pour la transmission du mouvement de réarmement du relais (26), ledit levier (64) portant également un doigt (68) constituant la première liaison mécanique (27) de déclenchement.

7. Appareil électrique de protection différentielle selon la revendication 5 ou 6, caractérisé en ce que l'un des contacts (40) d'interruption du circuit test (28) comporte un ressort (92) à torsion en matériau conducteur enfilé sur l'axe (80) de pivotement du levier de réarmement (76), et comprenant un brin d'extrémité susceptible de venir en engagement avec une première languette (96) fixe conductrice lors de la fermeture du contact (40) d'interruption correspondant à la deuxième position du levier de réarmement (76), le ressort (92) étant agencé pour solliciter le levier de réarmement (76) vers la première position autorisant le réarmement du relais (26), et l'ouverture du contact (40) d'interruption.

8. Appareil électrique de protection différentielle selon la revendication 6 ou 7, caractérisé en ce que l'autre contact (42) d'interruption du circuit test (28) comprend une lame de contact (102) élastique actionnée par un doigt (103) du levier de réarmement (76), et pouvant coopérer en position de fermeture du contact (42) avc une deuxième languette (100) fixe conductrice lorsque le levier de réarmement (76) est déplacé vers la deuxième position.

**Claims**

1. An electrical differential protection unit, notably a circuit breaker (10) or switch, having a multipole breaking device (12) with separable contacts (14, 16) actuated by an operating mechanism (18), and a differential trip device (20) comprising a residual differential current detector with a summing transformer (21), a trip relay (26) supplied by said detector so as to transmit a tripping order to the mechanism (18) when a differential current occurs, and a test circuit (28) having at least one test resistance in a branched leakage circuit connected between two connecting points (30, 32) of the active conductors (L, N) of the power supply system, respectively upstream and downstream from the transformer (21), the test circuit (28) comprising a test button (44) closing of which creates an artificial differential current detected by said detector, and a protective device (38) capable of disconnecting said resistance and of interrupting the artificial differential current in the test circuit (28) after opening of the multipole breaking device (12) by differential tripping of the unit, characterized in that the protective device (38) of the test circuit (28) comprises a pair of interrupting contacts (40, 42) arranged between the connecting points (30, 32) of the active conductors (L, N) and the test button (44) so as to ensure that the power supply to the test button (44) is cut after differential tripping regardless of the connection mode of the electrical unit.

2. The electrical differential protection unit according to claim 1, characterized in that the test circuit (28) comprises two test resistances (34, 36) connected respectively between the connecting points (32, 30) of the active conductors (L, N) and the interrupting contacts (42, 40).

3. The electrical differential protection unit according to claim 2, characterized in that the test button (44) is electrically connected in series with the two interrupting contacts (42, 40), opposite from the test resistances (34, 36), each terminal (50, 52) of the test button (44) being connected directly to the corresponding interrupting contact (42, 40).

4. The electrical differential protection unit according to claim 3, comprising a remote tripping control cooperating with the differential trip device (20) to bring about remote-controlled opening of the multipole breaking device (12) by artificial differential tripping, characterized in that the remote tripping control comprises a remote control means (46) connected in a link circuit (48) capable of being electrically connected in parallel to the terminals (50, 52) of the test button (44), the assembly being arranged to isolate the test button (44) and remote control means (46) when the unit is open.

5. The electrical differential protection unit according to one of the claims 1 to 4, the differential trip device (20) comprising in addition a first mechanical link (27) capable of transmitting the tripping order from the relay (26) to the operating mechanism (18), and a second mechanical link (45) with the operating mechanism (18) with handle to derive an automatic reset movement of the relay (26) from the opening movement of the multipole breaking device (12), the second mechanical link (45) being equipped with a reset lever (76) pivotally mounted on a spindle (80) between a first and a second stable position corresponding to opening and closing of the unit, characterized in that the reset lever (76) cooperates simultaneously with the two interrupting contacts (40, 42) of the test circuit (28) to bring about automatic opening of said contacts (40, 42) when the relay (26) is reset corresponding to movement of the reset lever (76) to the first position, and reclosing of said contacts (40, 42) when the reset lever (76) is moved to the second position in the course of closing of the operating mechanism (18) with handle of the unit.

6. The electrical differential protection unit according to claim 5, characterized in that the reset lever (76) cooperates on the one hand with a cam (70) transmitting the movement of the handle of the operating mechanism (18), and on the other hand with a drive lever (64) for transmission of the resetting movement of the relay (26), said lever (64) also bearing a finger (68) forming the first mechanical tripping link (27).

7. The electrical differential protection unit according to claim 5 or 6, characterized in that one of the interrupting contacts (40) of the test circuit (28) comprises a torsion spring (92) made of conducting material threaded onto the pivoting spindle (80) of the reset lever (76), and comprising an end strand capable of coming into engagement with a first stationary conducting strip (96) when closing of the interrupting contact (40) takes place corresponding to the second position of the reset lever (76), the spring (92) being arranged to bias the reset lever (76) to the first position enabling the relay (26) to be reset, and the interrupting contact (40) to open.

8. The electrical differential protection unit according to claim 6 or 7, characterized in that the other interrupting contact (42) of the test circuit (28) comprises a flexible contact blade (102) actuated by a finger (103) of the reset lever (76), and able to cooperate in the closed position of the contact (42) with a second stationary conducting strip (100) when the reset lever (76) is moved to the second position.

**Patentansprüche**

1. Elektrischer Differentialschutzapparat, namentlich ein Leistungsselbstschalter (10) oder ein Unterbrecher, der eine mehrpolige Abschalteinrichtung (12) mit durch einen Steuermechanismus (18) betätigten trennbaren Kontakten (14,16) besitzt, und ein Differentialauslöser (20), der einen Differenzstromdetektor mit Summenstromwandler (21) aufweist, ein vom genannten Detektor derart gespeistes Auslöserelais (26),das an den Mechanismus (18) einen Auslösebefehl abgibt, sobald ein Differenzstrom auftritt, und ein Testschaltkreis (28), der in einem zwischen zwei Verbindungspunkte (30, 32) der aktiven Netzleiter (L,N) oberhalb bzw. unterhalb des Transformator (21) geschalteten abgeleiteten Nebenstromkreis wenigstens einen Prüfwiderstand enthält, wobei der Testschaltkreis (28) einen Testknopf (44) aufweist, durch dessen Einschalten ein vom genannten Detektor erfasster künstlicher Differenzstrom entsteht, und eine Schutzeinrichtung (38), die den genannten Widerstand abschalten und den künstlichen Differenzstrom im Testschaltkreis (28) nach dem Oeffnen der mehrpoligen Unterbrechereinrichtung (12) durch die Differentialauslösung des Apparates unterbrechen kann, dadurch gekennzeichnet, dass die Schutzeinrichtung (38) des Testschaltkreises (28) ein Paar Unterbrecherkontakte (40, 42) aufweist, die zwischen den Verbindungspunkten (30,32) der aktiven Leiter (L,N) und dem Testknopf (44) derart angeordnet sind, dass sie nach erfolgter Differentialauslösung unabhängig von der Anschlussart des elektrischen Apparates ein Ausserspannungsetzen des Testknopfes (44) gewährleisten.

2. Elektrischer Differentialschutzapparat nach Anspruch 1, dadurch gekennzeichnet, dass der Prüfschaltkreis (28) zwei Prüfwiderstände (34,36) aufweist, die zwischen dem jeweiligen Verbindungspunkt (32,30) der aktiven Leiter (L,N) und dem entsprechenden Unterbrecherkontakt (42,40) eingeschaltet sind.

3. Elektrischer Differentialschutzapparat nach Anspruch 2, dadurch gekennzeichnet, dass der Testknopf (44) auf der den Prüfwiderständen gegenüberliegenden Seite elektrisch in Serie mit den beiden Unterbrecherkontakten (42,40) geschaltet ist, wobei jede Klemme (50,52) des Testknopfes (44) direkt an den entsprechenden Unterbrecherkontakt (40,42) angeschlossen ist.

4. Elektrischer Differentialschutzapparat nach Anspruch 3, der eine Auslösefernsteuerung umfasst, die mit dem Differentialauslöser (20) zusammenarbeitet, um ein fernbetätigtes Oeffnen der mehrpoligen Abschalteinrichtung (12) durch künstliche Differentialauslösung zu bewirken, dadurch gekennzeichnet, dass die Auslösefernsteuerung ein in einen Verbindungsstromkreis (48) eingefügtes Fernbedienungsmittel (46) aufweist, das elektrisch parallel zu den Klemmen (50,52) des Testknopfes (44) geschaltet sein kann, wobei das ganze derart ausgebildet ist, dass es den Prüfknopf (44) und das Fernbedienungsmittel (46) vom Netz trennt, wenn der Apparat ausgeschaltet wird.

5. Elektrischer Differentialschutzapparat nach einem der Ansprüche 1 bis 4, bei welchem der Differentialauslöser (20) zusätzlich eine erste mechanische Verbindung (27) aufweist, die den Auslösebefehl des Relais (26) an den Steuermechanismus (18) weitergibt, und eine zweite mechanische Verbindung (45) mit dem Handhabe-Steuermechanismus (18), um von der Oeffnungsbewegung der mehrpoligen Abschalteinrichtung (12) eine Bewegung zur automatischen Rückstellung des Relais (26) abzuleiten, wobei die zweite mechanische Verbindung (45) über einen auf einer Achse (80) zwischen einer ersten und einer zweiten, der Oeffnungs- bzw. Schliessstellung des Apparates entsprechenden stabilen Lage hin und her drehbar gelagerten Rückstellhebel (76) verfügt, dadurch gekennzeichnet, dass der Rückstellhebel (76) simultan mit den beiden Unterbrecherkontakten (40,42) des Testschaltkreises (28) zusammenarbeitet, um bei der Rückstellung des Relais (26), die der Bewegung des Rückstellhebels (76) in die erste Position entspricht, das automatische Oeffnen der genannten Kontakte (40,42) zu bewirken und das Wiederschliessen der genannten Kontakte (40,42), wenn der Rückstellhebel (76) während des Schliessens des Handhabe-Steuermechanismus (18) des Apparates in die zweite Position geschwenkt wird.

6. Elektrischer Differentialschutzapparat nach Anspruch 5, dadurch gekennzeichnet, dass der Rückstellhebel (76) einerseits mit einem die Bewegung der Handhabe des Steuermechanismus (18) übertragenden Nocken (70) zusammenarbeitet und andererseits mit einem Mitnehmerhebel (64) für die Uebertragung der das Relais (26) rückstellenden Bewegung, wobei der genannte Hebel (64) auch mit einem Finger (68) versehen ist, der die erste mechanische Verbindung (27) bildet.

7. Elektrischer Differentialschutzapparat nach Anspruch 5 oder 6, dadurch gekennzeichnet, dass einer der beiden Unterbrecherkontakte (40) des Teststromkreises (28) eine Drehfeder (92) aus einem Leitermaterial aufweist, die auf die Drehachse (80) des Rückstellhebels (76) geschoben ist und ein Drahtende aufweist, das beim der zweiten Position des Rückstellhebels entsprechenden Schliessen des Unterbrecherkontaktes (40) mit einer ersten festen Leiterzunge (96) in Verbindung treten kann, wobei die Feder (92) entsprechend ausgebildet ist, um den Rückstellhebel (76) in die erste Position zu drücken, was die Rückstellung des Relais (26) und das Oeffnen des Unterbrecherkontaktes (40) erlaubt.

8. Elektrischer Differentialschutzapparat nach Anspruch 6 oder 7, dadurch gekennzeichnet, dass der andere Unterbrecherkontakt (42) des Testschaltkreises (28) eine elastische Kontaktzunge (102) umfasst, die von einem Finger (103) des Rückstellhebels (76) betätigt wird und die in Schliessstellung des Kontaktes (42) mit einer zweiten festen Leiterzunge (100) zusammenarbeiten kann, wenn der Rückstellhebel (76) in die zweite Position bewegt wird.

FIG. 1

EP 0 264 313 B1

FIG. 2

**FIG. 3**

**FIG. 4**

FIG. 5